# EUROPEAN PATENT SPECIFICATION

(11) **EP 3 240 369 B1**
(45) Date of publication and mention of the grant of the patent: **01.01.2020**
(21) Application number: 15873468.1
(22) Date of filing: 05.11.2015
(51) Int. Cl.: H05B 37/02, H05B 33/08

(54) **DEVICE FOR DRIVING LIGHT EMITTING ELEMENT**
VORRICHTUNG ZUR ANSTEUERUNG EINES LICHTEMITTIERENDEN ELEMENTS
DISPOSITIF D'ATTAQUE D'ÉLÉMENT ÉLECTROLUMINESCENT

(30) Priority: 22.12.2014 KR 20140185732
(43) Date of publication of application: 01.11.2017
(73) Proprietor: LG Innotek Co., Ltd., Seoul, 04637 (KR)
(72) Inventor: YOON, Jae Hun, Seoul 04637 (KR); KIM, Do Yub, Seoul 04637 (KR); KIM, Min Hak, Seoul 04637 (KR); JEONG, Seung Beom, Seoul 04637 (KR)
(74) Representative: Plasseraud IP
(86) International application number: PCT/KR2015/011819
(87) International publication number: WO 2016/104940

(56) References cited:
- CN-A- 104 168 697
- JP-A- 2014 110 244
- KR-A- 20100 066 267
- KR-B1- 100 968 979
- US-A1- 2009 295 776
- US-A1- 2010 164 404
- US-A1- 2013 250 215
- US-A1- 2013 313 974

## Description

### [Technical Field]

Embodiments relate to a device for driving a light emitting element.

### [Background Art]

Recently, an LED light having high luminance, comparable to that of a lighting device such as an incandescent lamp, while being driven with low power has attracted increasing attention. Particularly, light driving devices for driving the LED light by controlling uniform current to flow through the LED light are actively researched and developed.

Such a light driving device has various lighting functions and, particularly, can enable lighting in various forms by changing dimming levels of LED elements arranged in serial/parallel connection.

In general, a light driving device can include a rectification circuit for rectifying full waves output from an AC power supply, a transformation circuit for transforming the voltage output from the rectification circuit and outputting the transformed voltage, a power factor correction circuit for correcting a power factor of power output from the AC power supply by controlling the output voltage of the transformation circuit, a smoothing circuit for smoothing the voltage output from the transformation circuit to output a stable DC voltage and supplying the output voltage to an LED module, a constant current driving circuit for controlling LED current such that uniform driving current flows through the LED module, and a dimming control circuit for controlling current flow in the LED module by controlling the constant current driving circuit according to PWM (Pulse Width Modulation), thereby controlling dimming. US 2010/164404 A1 and US 2009/295776 A1 disclose a device for driving a light-emitting element, comprising: a voltage generator for providing a DC signal for driving a light-emitting unit; a sensing resistor; and a dimming unit connected between the light-emitting unit and the sensing resistor and controlling current flowing through the sensing resistor and the light-emitting unit, wherein the dimming unit adjusts a level of the DC signal on the basis of a first sensing voltage according to a result obtained by sensing a voltage of a first node at which the light-emitting unit and a switch are connected and a second sensing voltage Vs according to a result obtained by sensing a voltage of a second node at which the switch and the sensing resistor are connected.

### [Disclosure]

### [Technical Problem]

Embodiments provide a device for driving a light emitting element which can improve power efficiency and prevent flickering.

### [Technical Solution]

A device for driving a light-emitting element according to claim 1. Preferred embodiments according to the dependent claims.

### [Advantageous Effects]

Embodiments can improve power efficiency and prevent flickering.

### [Description of Drawings]

FIG. 1 illustrates a configuration of a lighting apparatus.
FIG. 2a illustrates an example of a first sensing unit shown in FIG. 1.
FIG. 2b illustrates another example of the first sensing unit shown in FIG. 1.
FIG. 3 illustrates a configuration of a lighting apparatus according to another example.
FIG. 4 illustrates a configuration of a lighting apparatus according to another example.
FIG. 5 is a flowchart illustrating an operation of a controller to control the level of a DC voltage supplied from a voltage generator to a light-emitting unit shown in FIGS. 1 and 3.
FIG. 6 is a flowchart illustrating an operation of the controller to control a power factor correction unit of FIG. 4.
FIG. 7a illustrates light emission of a light-emitting unit when constant current control is performed using a duty ratio of a PWM signal.
FIG. 7b illustrates light emission of a light-emitting unit according to an example.
FIG. 8 illustrates a configuration of a lighting apparatus according to an embodiment.

### [Best Mode]

Reference will now be made in detail to the exemplary configurations, examples of which are illustrated in the accompanying drawings. In description of examples, it will be understood that when a layer (film), region, pattern or structure is referred to as being "above"/"on" or "below"/"under" another layer (film), region, pattern or structure, it can be directly "above"/"on" the other layer (film), region, pattern or structure or an intervening element may be present therebetween. Furthermore, relative terms, such as "lower"/"bottom" and "upper"/"top" may be used herein to describe one element's relationship to another elements as illustrated in the Figures.

In the drawings, dimensions of layers are exaggerated, omitted or schematically illustrated for clarity and convenience of description. In addition, dimensions of constituent elements do not entirely reflect actual dimensions thereof. The same reference numbers will be used throughout the drawings to refer to the same or like parts.

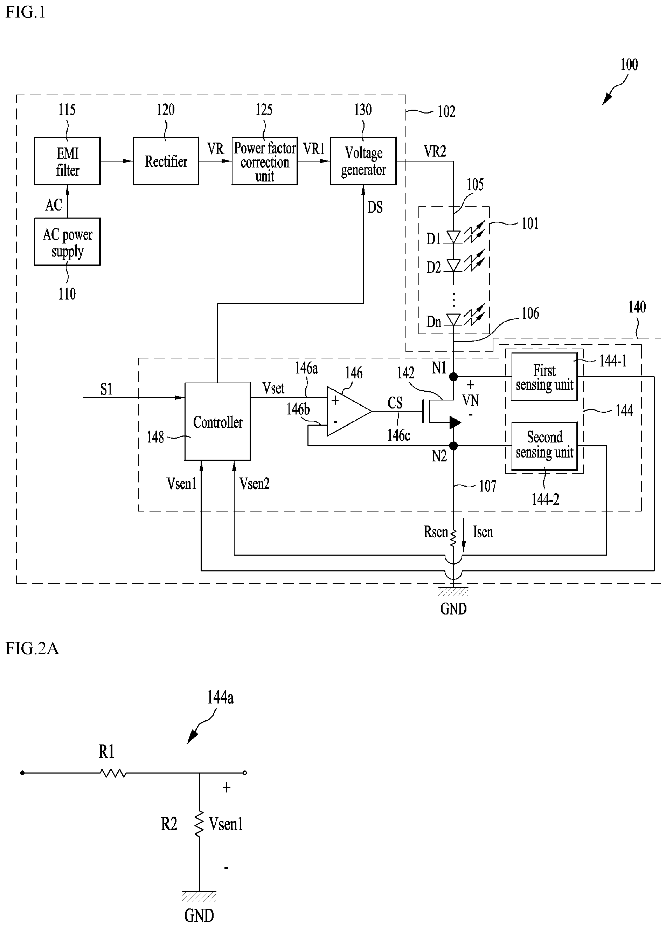

FIG. 1 illustrates a configuration of a lighting apparatus 100.

Referring to FIG. 1, the lighting apparatus 100 includes a light-emitting unit 101 and a light-emitting element driving device 102 for driving the light-emitting unit 101.

The light-emitting unit 101 includes a plurality of light-emitting element arrays D1 to Dn (n being a natural number greater than 1) connected in series.

Each of the light-emitting element arrays D1 to Dn (n being a natural number greater than 1) may include one or more light-emitting elements, for example, light-emitting diodes.

When a plurality of light-emitting elements is included in a light-emitting element array, the light-emitting elements may be connected in series, in parallel or in series and parallel.

The light-emitting element driving device 102 includes an AC power supply 110, an EMI filter 115, a rectifier 120, a power factor correction unit 125, a power generator 130, a dimming unit 140 and a sensing resistor Rsen.

The AC power supply unit 110 provides an AC signal.

For example, the AC signal AC may be an AC voltage and/or AC current.

The EMI (Electromagnetic Interference) filter 115 filters external electromagnetic noise and removes noise included in the AC signal AC supplied from the AC power supply 110, for example, conductive noise. The EMI filter 115 may be implemented to include at least one of a capacitor, a transformer and an inductor.

The rectifier 120 rectifies the AC signal AC from which the electromagnetic noise has been removed by the EMI filter 115 and provides a rectified signal (ripple current) VR according to the rectification result.

For example, the rectifier 120 may full-wave rectify the AC signal AC and output the rectified signal VR according to the full-wave rectification result. That is, the rectified signal VR may be a signal obtained by full-wave rectifying the AC signal AC.

While the rectifier 120 may be implemented as a full-wave diode bridge circuit including four bridge-connected diodes, the rectifier 120 is not limited thereto.

The power factor correction unit 125 adjusts phase differences of the voltage and current of the rectified signal VR to correct the power factor of the rectified signal VR and outputs a power-factor-corrected rectified signal VR1.

The voltage generator 130 changes the level of the rectified signal VR1 having the power factor corrected by the power factor correction unit 125 on the basis of a dimming signal DS provided by the dimming unit 140 and outputs a level-changed DC signal VR2. For example, the DC signal VR2 may be a DC voltage.

Here, the level of the DC signal VR2 output from the voltage generator 130 may be set or changed on the basis of the dimming signal DS provided by the dimming unit 140.

The DC signal VR2 output from the voltage generator 130 is provided to the light-emitting unit 101. For example, the DC signal VR2 output from the voltage generator 130 can be provided to an input terminal 105 of the light-emitting unit 101. Here, the input terminal 105 of the light-emitting unit 101 may be a positive terminal of the first light-emitting element array D1 of the serially connected light-emitting element arrays D1 to Dn.

The voltage generator 130 may be implemented as a converter that can change the DC level of the rectified signal VR1. For example, the voltage generator 130 may be implemented to include at least one of a DC-DC converter, a resonant LLC half bridge converter, a fly back converter, and a buck converter.

The dimming unit 140 connects the light-emitting unit 101 and the sensing resistor Rsen and adjusts the luminance of the light-emitting unit 101 by controlling current flowing through the light-emitting unit 101.

Further, the dimming unit 140 changes the level of the DC signal VR2 supplied from the voltage generator 130 such that a voltage VN between an output terminal 106 of the light-emitting unit 101 and one terminal 107 of the sensing resistor Rsen is maintained at a predetermined reference voltage.

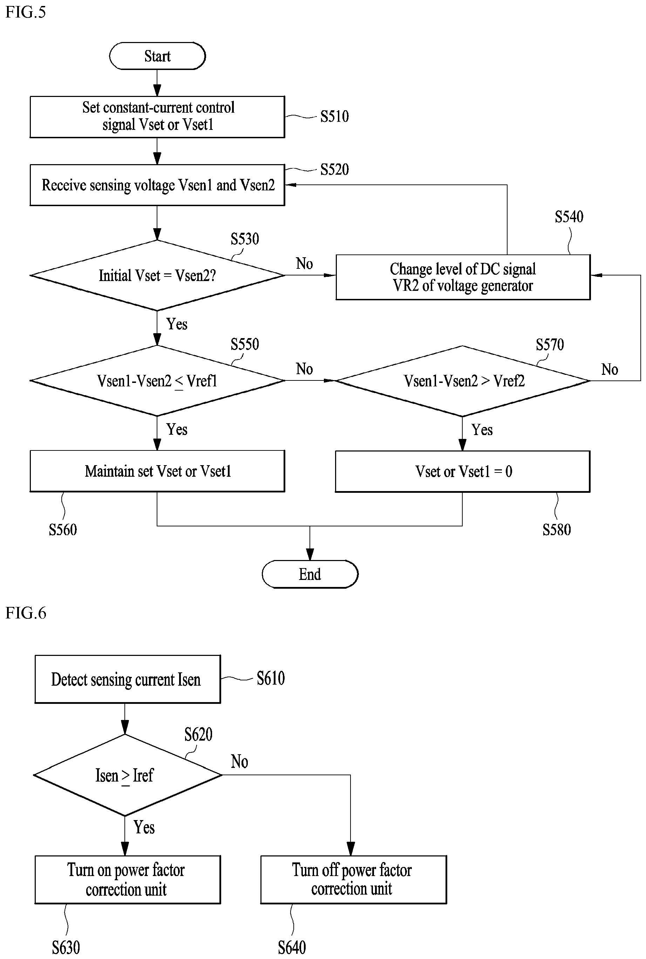

Here, the output terminal 106 of the light-emitting unit 101 may be a negative terminal of the last light-emitting element array Dn of the serially connected light-emitting element arrays D1 to Dn. The predetermined reference voltage will be described with reference to FIG. 5.

The dimming unit 140 may adjust the level of the DC signal VR2 on the basis of a first sensing voltage Vsen1 obtained by sensing a voltage of a first node N1 at which the light-emitting unit 101 and a switch 142 are connected and a second sensing voltage Vsen2 obtained by sensing a voltage of a second node N2 at which the switch 142 and the sensing resistor Rsen are connected.

For example, the dimming unit 140 can generate the dimming signal DS on the basis of the first sensing voltage Vsen1 obtained by sensing the voltage of the first node N1 at which the light-emitting unit 101 and the switch 142 are connected and the second sensing voltage Vsen2 obtained by sensing the voltage of the second node N2 at which the switch 142 and the sensing resistor Rsen are connected.

The dimming unit 140 may adjust the level of the DC signal VR2 such that the difference Vsen1-Vsen2 between the first sensing voltage Vsen1 and the second sensing voltage Vsen2 is equal to or lower than a first reference voltage.

Further, the dimming unit 140 may block current flow between the light-emitting unit 101 and the sensing resistor Rsen when the difference Vsen1-Vsen2 between the first sensing voltage Vsen1 and the second sensing voltage Vsen2 exceeds a second reference voltage. For example, the dimming unit 140 can decrease the level of the DC signal VR2 to a level that is insufficient to turn on the light-emitting unit 101 or control the voltage generator 130 to change the level of the DC signal VR2 to zero when the difference Vsen1-Vsen2 between the first sensing voltage Vsen1 and the second sensing voltage Vsen2 exceeds the second reference voltage.

The dimming unit 140 may include the switch 142, a voltage sensing unit 144, an amplifier 146 and a controller 148.

The switch 142 is connected between the output terminal 106 of the light-emitting unit 101 and one terminal 107 of the sensing resistor Rsen and is switched on the basis of a constant-current control signal Vset supplied from the controller 148.

For example, the switch 142 can be implemented as a transistor, for example, an FET or a BJT.

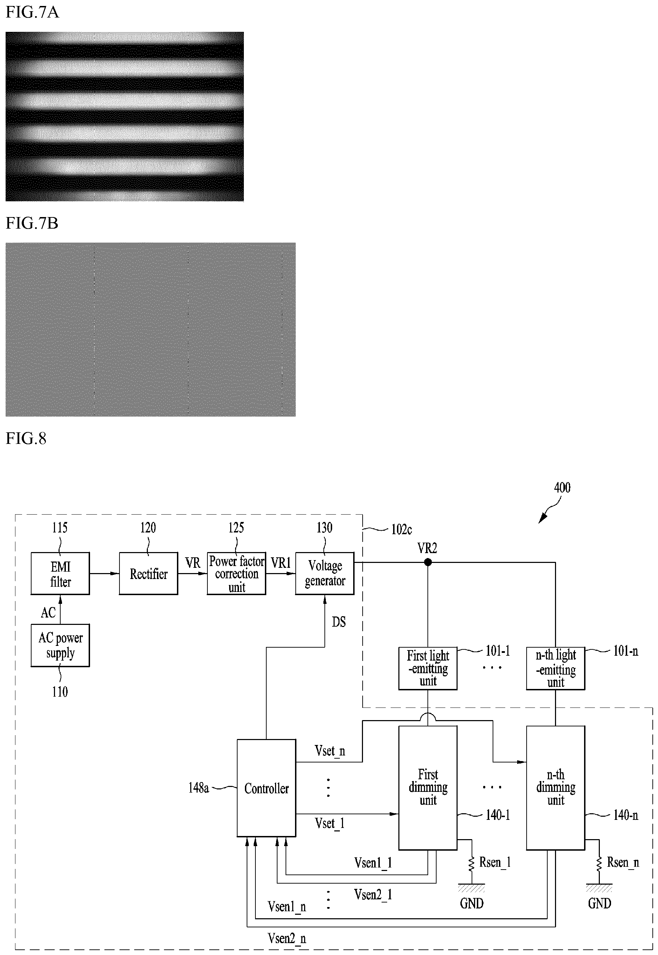

For example, the switch 142 can be implemented as an NMOS transistor including a drain connected to the output terminal 106 of the light-emitting unit 101, a source connected to one terminal 107 of the sensing resistor Rsen and a gate to which the output of the amplifier 146 is input. However, the switch 142 is not limited thereto and may be implemented as a PMOS transistor in other examples and the embodiment shown in figure 8.

The switch 142 may be implemented in various forms that electrically connect the output terminal 106 of the light-emitting unit 101 and one terminal 107 of the sensing resistor Rsen in response to the output CS of the amplifier 146.

The voltage VN between the output terminal 106 of the light-emitting unit 101 and one terminal 107 of the sensing resistor Rsen may be a voltage between the source and drain of the switch 142 implemented as a transistor.

The voltage sensing unit 144 may sense the voltage of the first node N1 at which the output terminal 106 of the light-emitting unit 101 and the switch 142 are connected and the voltage of the second node N2 at which one terminal 107 of the sensing resistor Rsen and the switch 142 are connected.

For example, the voltage sensing unit 144 can sense the voltage of the first node N1 and provide the first sensing voltage Vsen1 to the controller 148 according to the sensing result.

In addition, the voltage sensing unit 144 can sense the voltage of the second node N2 and provide the second sensing voltage Vsen2 to the controller 148 according to the sensing result.

The voltage sensing unit 144 may include a first sensing unit 144-1 for sensing the voltage of the first node N1 and providing the first sensing voltage Vsen1 and a second sensing unit 144-2 for sensing the voltage of the second node N2 and providing the second sensing voltage Vsen2.

FIG. 2a illustrates an example 144a of the first sensing unit 144-1 shown in FIG. 1.

Referring to FIG. 2a, the first sensing unit 144a may include a plurality of resistors (e.g., R1 and R2) serially connected between the first node N1 and a ground power supply GND and may provide a voltage applied to at least one of the plurality of resistors (e.g., R1 and R2) to the controller 148 as the first sensing voltage Vsen1.

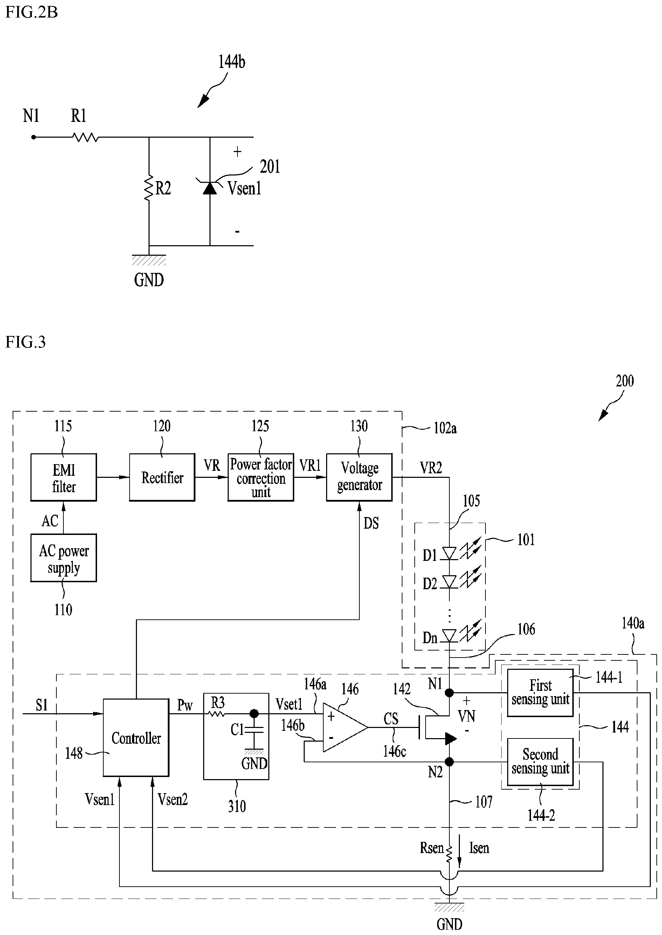

FIG. 2b illustrates another example 144b of the first sensing unit 144-1 shown in FIG. 1.

Referring to FIG. 2b, the first sensing unit 144b may include a plurality of resistors (e.g., R1 and R2) serially connected between the first node N1 and the ground power supply GND and a Zener diode 201 connected in parallel with at least one (e.g., R2) of the plurality of resistors (e.g., R1 and R2) and provide a voltage applied across the Zener diode 201 to the controller 148 as the first sensing voltage Vsen1.

For example, the first sensing unit 144b can include first and second resistors R1 and R2 serially connected between the first node N1 and the ground power supply GND and the Zener diode 201 connected between a connecting node of the first and second resistors R1 and R2 and the ground power supply GND and provide the voltage applied across the Zener diode 201 to the controller 148 as the first sensing voltage Vsen1.

The second sensing unit 144-2 may provide the voltage applied to the second node N2 to the controller 148 as the second sensing voltage Vsen2.

For example, the second sensing unit 144-2 can sense the voltage applied to the sensing resistor Rsen and provide the voltage applied to the sensing resistor Rsen to the controller 148.

The examples illustrated in FIGS. 2a and 2b may be applied to the second sensing unit 144-2 in other examples. However, values of resistors included in the second sensing unit 144-2 may differ from those of the first sensing unit 144-1.

The amplifier 146 amplifies the constant-current control signal Vset supplied from the controller 148 and the voltage of the second node N2 and outputs an amplified signal CS according to the amplification result. For example, the constant-current control signal Vset supplied from the controller 148 shown in FIG. 1 may be an analog signal such as a DC voltage instead of a pulse signal such as a PWM signal.

The amplifier 146 may include a first input terminal 146a to which the constant-current control signal Vset is input, a second input terminal 146b connected to the second node N2 and an output terminal 146c through which the amplified signal CS is output. While the amplifier 146 may be implemented as an operational amplifier or a differential amplifier, the amplifier 146 is not limited thereto. For example, the first input terminal 146a may be a positive input terminal (+) of an operational amplifier and the second input terminal 146b may be a negative input terminal (-) of the operational amplifier.

Current flowing through the sensing resistor Rsen may be determined by the constant-current control signal Vset provided by the controller 148, and thus current flowing through the light-emitting unit 101 can be controlled in the present example. According to characteristics of the operational amplifier, the voltage of the second node N2 is the constant-current control signal Vset input to the first input terminal 146a and thus sensing current Isen flowing through the sensing resistor Rsen may be obtained by dividing the constant-current control signal Vset by the value of the sensing resistor Rsen.

Since the constant-current control signal Vset is not a pulse signal but is an analog signal, the current flowing through the light-emitting unit 101 can be linear unless the level of the constant-current control signal Vset is changed by the light-emitting unit 101 and thus flickering of the light-emitting unit 101 can be reduced or eliminated.

The controller 148 may control the voltage generator 130 to change the level of the DC signal VR2 output from the voltage generator 130 on the basis of the first sensing voltage Vsen1 and the second sensing voltage Vsen2 supplied from the voltage sensing unit 144.

For example, the controller 148 can generate the dimming signal DS for controlling the voltage generator 130 on the basis of the first sensing voltage Vsen1 and the second sensing voltage Vsen2, and the voltage generator 130 can change the level of the rectified signal VR1 on the basis of the dimming signal DS and output the level-changed DC signal VR2. That is, the level of the DC signal VR2 supplied from the voltage generator 130 to the light-emitting unit 101 can be determined on the basis of the dimming signal DS.

The controller 148 may adjust the level of the DC signal VR2 of the voltage generator 130 such that the difference Vsen1-Vsen2 between the first sensing voltage Vsen1 and the second sensing voltage Vsen2 becomes equal to or lower than a predetermined reference voltage.

For example, the controller 148 can adjust the level of the DC signal VR2 of the voltage generator 130 such that the difference Vsen1-Vsen2 between the first sensing voltage Vsen1 and the second sensing voltage Vsen2 becomes equal to a predetermined first reference voltage.

For example, the predetermined first reference voltage can be a drain-source on state voltage of the switch 142 implemented as a transistor. However, the predetermined first reference voltage is not limited thereto. For example, while the predetermined reference voltage can be 0.4 V, the predetermined reference voltage is not limited thereto.

To drive the serially connected light-emitting element arrays, a first voltage corresponding to the sum of rated operating voltages of the light-emitting element arrays may be applied across both terminals of the light-emitting element arrays.

When a function temperature of the light-emitting element arrays increases, operating voltages of the light-emitting element arrays may decrease. Such operating voltage decreases in the light-emitting element arrays cause a difference between the first voltage and an operating voltage actually applied across both terminals of the light-emitting element arrays. This voltage difference can result in generation of heat by other elements of the light-emitting element driving device, resulting in power efficiency reduction in the lighting apparatus.

It is possible to prevent power consumption wasted as heat in the switch 142 by decreasing the level of the DC signal VR2 provided to the light-emitting unit 101 on the basis of a result obtained by sensing the voltage across the switch 142 according to the present example.

Since the dimming unit 140 senses the difference between the first sensing voltage Vsen1 and the second sensing voltage Vsen2 and adjusts the level of the DC signal VR2 provided to the light-emitting unit 101 such that the difference Vsen1-Vsen2 between the first and second sensing voltages is maintained as a predetermined voltage according to the sensing result, power consumed by the switch 142 can remain uniform even when the operating voltage of the light-emitting unit 101 is changed and power efficiency reduction in the lighting apparatus 100 can be prevented.

If the dimming controller 140 does not perform the aforementioned control operation, the difference between the voltage supplied from the voltage generator 130 and the voltage actually applied to the light-emitting unit 101 can be consumed as heat in the switch 142 due to operating voltage reduction in the light-emitting unit 101, and thus power efficiency of the lighting apparatus 100 can be reduced.

The controller 148 may turn off the light-emitting unit 101 by preventing the voltage generator 130 from providing the DC signal VR2 to the light-emitting unit 101 when the difference Vsen1-Vsen2 between the first sensing voltage Vsen1 and the second sensing voltage Vsen2 exceeds the second reference voltage.

Alternatively, the controller 148 may set or change the level of the constant-current control signal Vset to zero when the difference Vsen1-Vsen2 between the first sensing voltage Vsen1 and the second sensing voltage Vsen2 exceeds the second reference voltage.

When the difference Vsen1-Vsen2 between the first sensing voltage Vsen1 and the second sensing voltage Vsen2 exceeds the second reference voltage, the controller 148 needs to prevent current from flowing through the light-emitting unit for protecting the light-emitting unit 101 upon determining that short-circuit is generated in the light-emitting unit 101. To this end, the controller 148 may block provision of the DC signal VR2 or change the level of the constant-current control signal Vset to 0.

FIG. 3 illustrates a configuration of the lighting apparatus 100 according to another example. The same reference numbers will be used in FIGS. 1 and 3 to refer to the same or like parts, and a repeated description thereof will be simplified or omitted.

Referring to FIG. 3, the lighting apparatus 200 includes the light-emitting unit 101 and a light-emitting element driving device 102a for driving the light-emitting unit 101.

The light-emitting element driving unit 102a includes the AC power supply 110, the EMI filter 115, the rectifier 120, the power factor correction unit 125, the power generator 130, a dimming unit 140a and the sensing resistor Rsen.

The dimming unit 140a may include the switch 142, the voltage sensing unit 144, the amplifier 146, a smoothing circuit 310 and the controller 148.

The dimming unit 140a illustrated in FIG. 3 may further include the smoothing circuit 310 in addition to the dimming unit 140 shown in FIG. 1.

The smoothing circuit 310 smooths a signal Pw supplied form the controller 148 and outputs a constant-current control signal Vset1 according to the smoothing result.

The signal Pw supplied from the controller 148 may be a pulse width modulation (PWM) signal. When constant current control for the light-emitting unit 101 is performed on the basis of the duty ratio of such a PWM signal, current flowing through the light-emitting unit 101 has a ripple component and thus flickering may occur in the light-emitting unit 101 due to the ripple component.

The smoothing circuit 310 smooths the PWM signal supplied from the controller 148 in order to remove such flickering and generates the constant-current control signal Vset1 that is a DC analog signal from which a ripple current component has been removed according to the smoothing result.

The ripple component of the current flowing through the light-emitting unit 101 can be reduced by the constant-current control signal Vset1 generated by the smoothing circuit 310. The present example can perform constant current control with respect to the light-emitting unit 101 using the level of the constant-current control signal Vset1 corresponding to an analog signal instead of the duty ratio of a PWM signal to thereby reduce or remove flickering of the light-emitting unit 101.

While the smoothing circuit 310 may be implemented as an RC smoothing circuit including a resistor R3 connected between the controller 148 and a first input terminal 146a of the amplifier 146 and a capacitor C1 connected between the first input terminal 146a of the amplifier 146 and the ground power supply GND, the smoothing circuit 310 is not limited thereto and may be implemented in various forms including a resistor, a capacitor or an inductor.

FIG. 7a illustrates light emission of a light-emitting unit when dimming control is performed using the duty ratio of a PWM signal and FIG. 7b illustrates light emission of the light-emitting unit 101 according to an example.

Flickering is generated due to a contrast difference in light emission of the light-emitting unit illustrated in FIG. 7a. Conversely, there is little contrast difference and flickering in light emission of the light-emitting unit illustrated in FIG. 7b.

The present example can adjust a dimming range up to 1% of maximum current that can flow through the light-emitting unit 101 because flickering is not generated even at low illumination, thereby reducing energy consumption.

According to the present example, accurate current control can be performed because the current flowing through the light-emitting unit 101 or the luminance of the light-emitting unit 101 is controlled by adjusting the DC level of the constant-current control signal Vset1.

FIG. 5 is a flowchart illustrating the operation of the controller 148 to control the level of the DC voltage VR2 supplied from the voltage generator 130 to the light-emitting unit 101 shown in FIG. 3.

Referring to FIG. 5, the controller 148 sets the constant-current control signal Vset1 supplied to the first input terminal 146a of the amplifier 146 using an external signal S1 (refer to FIG. 3) received through a communication interface (S510). For example, the level of the analog signal may be a target to be set with respect to Vset of FIG. 1 and the duty ratio of the PWM signal may be a target to be set with respect to Vset1 of FIG. 3. The constant-current control signal Vset or Vset1 that determines the luminance of the light-emitting unit 101 may be set according to user selection. For example, a dimming degree may be determined in S510.

For example, the controller 148 can output a pulse width modulation signal Pw corresponding to the signal S1 received from the outside and the signal Pw provided by the controller 148 can be converted into the constant-current control signal Vset1 corresponding to an analog signal, as shown in FIG. 3. The level of the constant-current control signal Vset1 can be determined by the duty ratio of the signal Pw supplied from the controller 148. For example, the level of the constant-current control signal Vset1 can be proportional to the duty ratio of the signal Pw supplied from the controller 148.

Then, the controller 148 receives the first and second sensing voltages Vsen1 and Vsen2 supplied from the voltage sensing unit 144 (S520).

Subsequently, the controller 148 compares the set constant-current control signal Vset or Vset1 with the second sensing voltage Vsen2 in order to determine whether the voltage Vsen2 actually applied to the sensing resistor Rsen due to the current which flows through the light-emitting unit 101 according to the DC signal VR2 supplied from the voltage generator 130 is identical to the set constant-current control signal Vset or Vset1 (S530).

When the second sensing voltage Vsen2 is not identical to the set constant-current control signal Vset or Vset1, the controller 148 changes the level of the DC signal VR2 supplied from the voltage generator 130 to the light-emitting unit 101 (S540). The controller 148 may repeatedly perform steps S520 to S540 until the second sensing voltage Vsen2 becomes identical to the set constant-current control signal Vset or Vset1.

For example, the second sensing voltage Vsen2 may be lower than the set constant-current control signal Vset or Vset1. In this case, the controller 148 can change the level of the DC signal VR2 until the set constant-current signal Vset or Vset1 becomes the second sensing voltage Vsen2.

On the contrary, when the second sensing voltage Vsen2 is identical to the set constant-current control signal Vset or Vset1, the controller 148 determines whether the difference Vsen1-Vsen2 between the received first sensing voltage Vsen1 and second voltage Vsen2 is equal to or lower than the predetermined first reference voltage Vref1 (S550).

For example, the predetermined first reference voltage Vref1 may be a drain-source on state voltage of the switch 142 implemented as a transistor. For example, the predetermined first reference voltage Vref1 can be 0.4 V. However, the first reference voltage Vref1 is not limited thereto.

When the difference Vsen1-Vsen2 between the received first sensing voltage Vsen1 and second voltage Vsen2 is equal to or lower than the predetermined first reference voltage Vref1, the controller 148 does not change the level of the DC signal VR2 and maintains the set constant-current control signal Vset or Vset1 (S560).

The fact that the difference Vsen1-Vsen2 between the received first sensing voltage Vsen1 and second voltage Vsen2 is equal to or lower than the predetermined first reference voltage Vref1 means that there is no or little power wasted as heat in the switch 142, and thus the controller 148 does not change the level of the DC signal VR2. The opposite case means that lots of power is wasted as heat in the switch 142, and thus the controller 148 reduces the level of the DC signal VR2.

When the difference Vsen1-Vsen2 between the received first sensing voltage Vsen1 and second voltage Vsen2 exceeds the predetermined first reference voltage Vref1, the controller 148 determines whether the difference Vsen1-Vsen2 between the received first sensing voltage Vsen1 and second voltage Vsen2 exceeds the second reference voltage Vref2 (S570). The second reference voltage Vref2 is higher than the first reference voltage Vref1 (Vref2>Vref1).

The second reference signal Vref2 may be a voltage by which the light-emitting unit 101 is determined to short-circuit. For example, the second reference voltage Vref2 can be 3.5 V. However, the second reference voltage Vref2 is not limited thereto.

When the difference Vsen1-Vsen2 between the received first sensing voltage Vsen1 and second voltage Vsen2 exceeds the predetermined first reference voltage Vref1 and is equal to or lower than the second reference voltage Vref2 (Vref1<Vsen1-Vsen2≤Vref2), the controller 148 changes the level of the DC signal VR2 supplied from the voltage generator 130 to the light-emitting unit 101 (S550->S570->S540).

The controller 149 repeatedly performs steps S520, S530, S550, S570 and S540 until the difference Vsen1-Vsen2 between the received first sensing voltage Vsen1 and second voltage Vsen2 becomes equal to or lower than the first reference voltage Vref1. For example, the controller 148 can control the difference Vsen1-Vsen2 between the received first sensing voltage Vsen1 and second voltage Vsen2 to be equal to or lower than the first reference voltage Vref1 by decreasing the level of the DC signal VR2 supplied from the voltage generator 130 to the light-emitting unit 101.

For example, when the junction temperature of the light-emitting unit 101 increases and thus the driving voltage of the light-emitting unit 101 decreases, the difference Vsen1-Vsen2 between the received first sensing voltage Vsen1 and second voltage Vsen2 increases. When the difference Vsen1-Vsen2 between the received first sensing voltage Vsen1 and second voltage Vsen2 increases to be equal to or lower than the second reference voltage Vref2 while exceeding the first reference voltage Vref1, the controller 148 can decrease the level of the DC signal VR2 to improve power efficiency.

When the difference Vsen1-Vsen2 between the received first sensing voltage Vsen1 and second voltage Vsen2 exceeds the second reference signal Vref2 (Vsen1-Vsen2>Vref2), the controller 148 can change the level of the set constant-current control signal Vset or Vset1 to zero.

When the difference Vsen1-Vsen2 between the received first sensing voltage Vsen1 and second voltage Vsen2 exceeds the second reference signal Vref2, the controller 148 can change the level of the constant-current control signal Vset or Vset1 to 0 such that current does not flow through the light-emitting unit 101 in order to protect the light-emitting unit 101 and the light-emitting element driving device 102 upon determining that short-circuit is generated in the light-emitting unit 101.

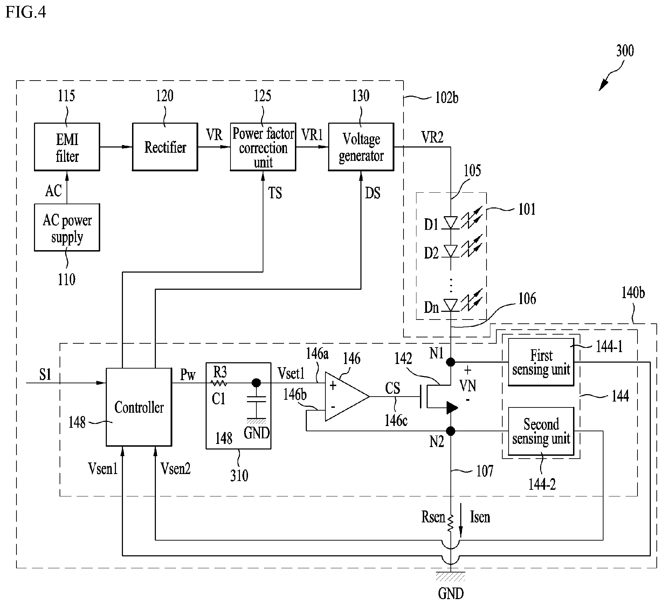

FIG. 4 illustrates a configuration of a lighting apparatus 300 according to another example. The same reference numbers will be used in FIGS. 1 and 4 to refer to the same or like parts, and a repeated description thereof will be simplified or omitted.

Referring to FIG. 4, the lighting apparatus 300 includes a light-emitting unit 101 and a light-emitting element driving device 102b for driving the light-emitting unit 101.

The light-emitting element driving device 102b includes the AC power supply 110, the EMI filter 115, the rectifier 120, the power factor correction unit 125, the power generator 130, a dimming unit 140b and the sensing resistor Rsen.

The dimming unit 140b may include the switch 142, the voltage sensing unit 144, the amplifier 146, the smoothing circuit 310 and a controller 148-1.

The controller 148-1 outputs the dimming signal DS for controlling the voltage generator 130 and a PFC control signal TS for controlling the power factor correction unit 125.

Description of the dimming signal DS is identical to description with reference to FIG. 1 and thus is omitted to avoid redundant description.

The controller 148-1 calculates sensing current Isen flowing through the sensing resistor Rsen on the basis of the second sensing voltage Vsen2 supplied from the second sensing unit 144-2 and turns on or off the power factor correction unit 125 on the basis of the calculated sensing current Isen.

FIG. 6 is a flowchart illustrating an operation of the controller 148-1 to control the power factor correction unit 125 of FIG. 4.

Referring to FIG. 6, the controller 148-1 detects the sensing current Isen flowing through the sensing resistor Rsen on the basis of the second sensing voltage Vsen2 supplied from the second sensing unit 144-2 (S610).

The controller 148-1 can store the value of the sensing resistor Rsen and calculate the sensing current Isen by dividing the second sensing voltage Vsen2 received from the second sensing unit 144-2 by the stored value of the sensing resistor Rsen.

Then, the controller 148-1 determines whether the value of the detected sensing current Isen is equal to or greater than a predetermined reference current value Iref (S620). For example, the current flowing through the light-emitting unit 101 can be controlled by the constant-current control signal Vset or Vset1 supplied from the controller 148, and the predetermined reference current value Iref may be 20% to 50% of maximum current that can flow through the light-emitting unit 101 in response to the constant-current control signal Vset or Vset1.

For example, the predetermined reference current value Iref can be 20% of the maximum current that can flow through the light-emitting unit 101 in response to the maximum constant-current control signal Vset or Vset1.

Then, when the value of the detected sensing current Isen is lower than the predetermined reference current value Iref, the controller 148-1 turns off the power factor correction unit 125 such that the power factor correction unit 125 does not operate. That is, when the value of the detected sensing current Isen is lower than the predetermined reference current value Iref, the controller 148-1 turns off the power factor correction unit 125 such that power is not consumed by the power factor correction unit 125.

On the other hand, when the value of the detected sensing current Isen is equal to or greater than the predetermined reference current value Iref, the controller 148-1 turns on the power factor correction unit 125 such that the power factor correction unit 125 performs an operation. For example, the controller 148-1 can turn off or on the power factor correction unit 125 by blocking power provided to the power factor correction unit 125 or supplying power to the power factor correction unit 125 using the PFC control signal TS. However, examples are not limited thereto.

In a period in which the current flowing through the light-emitting unit 101 is lower than the reference current value Iref, power factor improvement is insufficient even if power factor correction is performed. Accordingly, the present example can prevent the power factor correction unit 125 from consuming power by turning off the power factor correction unit 125 in the period in which the current flowing through the light-emitting unit 101 is lower than the reference current value Iref, thereby improving power efficiency.

Furthermore, the present example can secure an EMI (Electromagnetic Interference) margin by suspending the operation of the power factor correction unit 125 in a period in which power factor correction is not needed in order to reduce EMI.

FIG. 8 illustrates a configuration of a lighting apparatus 400 according to an embodiment. The same reference numbers will be used in FIGS. 1, 3 and 8 to refer to the same or like parts, and a repeated description thereof will be simplified or omitted.

Referring to FIG. 8, the lighting apparatus 400 includes a plurality of light-emitting units 101-1 to 101-n (n being a natural number greater than 1) and a light-emitting element driving device 102c for driving the plurality of light-emitting units 101-1 to 101-n (n being a natural number greater than 1).

Each of the plurality of light-emitting units 101-1 to 101-n (n being a natural number greater than n) may be implemented to be identical to the light-emitting unit 101 described with reference to FIG. 1 and description thereof is omitted to avoid redundant description.

The light-emitting element driving device 102c includes the AC power supply 110, the EMI filter 115, the rectifier 120, the power factor correction unit 125, the power generator 130, a plurality of dimming units 140-1 to 140-n (n being a natural number greater than 1), a plurality of sensing resistors Rsen_1 to Rsen_n (n being a natural number greater than 1) and a controller 148a.

The AC power supply 110, the EMI filter 115, the rectifier 120, the power factor correction unit 125 and the power generator 130 of the light-emitting element driving device 102c may be identical to those described with reference to FIGS. 1 and 3. The DC signal VR2 output from the voltage generator 130 is simultaneously provided to the plurality of dimming units 140-1 to 140-n (n being a natural number greater than 1).

Each of the plurality of dimming units 140-1 to 140-n (n being a natural number greater than 1) may include: an amplifier 146 having a first input terminal to which a corresponding one of constant-current control signals Vset_1 to Vset_n (n being a natural number greater than 1) is input, a second input terminal connected to a corresponding one of the plurality of sensing resistors Rsen_1 to Rsen_n (n being a natural number greater than 1), and an output terminal; a switch 142 connected between a corresponding one of the plurality of light-emitting units 101-1 to 101-n (n being a natural number greater than 1) and one terminal of a corresponding one of the plurality of sensing resistors Rsen_1 to Rsen_n (n being a natural number greater than 1) and switched in response to the output of the amplifier 146; and a voltage sensing unit 144 outputting first sensing voltages Vsen1_1 to Vsen1_n (n being a natural number greater than 1) according to results obtained by sensing a voltage of the first node N1 at which a corresponding one of the plurality of light-emitting units 101-1 to 101-n (n being a natural number greater than 1) and the switch 142 are connected and second sensing voltages Vsen2_1 to Vsen2_n (n being a natural number greater than 1) according to results obtained by sensing a voltage of the second node N2 at which the switch 142 and one terminal of a corresponding one of the plurality of sensing resistors Rsen_1 to Rsen_n (n being a natural number greater than 1) are connected.

The controller 148a may adjust the level of the DC signal VR2 on the basis of the differences Vsen1_1-Vsen2_1 to Vsen1_n-Vsen2_n between the first sensing voltages and the second sensing voltages.

The plurality of dimming units 140-1 to 140-n (n being a natural number greater than 1) connects corresponding light-emitting units 101-1 to 101-n (n being a natural number greater than 1) to corresponding sensing resistors Rsen_1 to Rsen_n (n being a natural number greater than 1) and controls luminance of the plurality of light-emitting units 101-1 to 101-n (n being a natural number greater than 1) by adjusting current flowing through the plurality of light-emitting units 101-1 to 101-n (n being a natural number greater than 1).

Each of the dimming units 140-1 to 140-n (n being a natural number greater than 1) may include the switch 142, the voltage sensing unit 144 and the amplifier 146. Description of the switch 142, the voltage sensing unit 144 and the amplifier 146 of FIG. 1 may be equally applied to the plurality of dimming units 140-1 to 140-n (n being a natural number greater than 1).

In another embodiment, each of the plurality of dimming units 140-1 to 140-n (n being a natural number greater than 1) may further include the smoothing circuit 310 shown in FIG. 3.

The switch 142 of each of the plurality of dimming units 140-1 to 140-n (n being a natural number greater than 1) may be connected between the output terminal 106 of a corresponding one of the plurality of light-emitting units 101-1 to 101-n (n being a natural number greater than 1) and a corresponding one of the plurality of sensing resistors Rsen_1 to Rsen_n (n being a natural number greater than 1) and may be switched on the basis of a corresponding one of the constant-current control signals Vset_1 to Vset_n (n being a natural number greater than 1) supplied from the controller 148a.

The plurality of dimming units 140-1 to 140-n (n being a natural number greater than 1) can output the first sensing voltages Vsen1_1 to Vsen1_n (n being a natural number greater than 1) according to a result obtained by sensing the voltage of the first node N1 and the second sensing voltages Vsen2_1 to Vsen2_n (n being a natural number greater than 1) according to a result obtained by sensing the voltage of the second node N1.

The controller 158a provides the constant-current control signals Vset_1 to Vset_n (n being a natural number greater than 1) for dimming to the plurality of dimming units 140-1 to 140-n (n being a natural number greater than 1).

The controller 148a may control the voltage generator 130 to change the level of the DC signal VR2 output from the voltage generator 130 on the basis of the differences Vsen1_1-Vsen2_1 to Vsen1_n-Vsen2_n between the first sensing voltages Vsen1_1 to Vsen1_n (n being a natural number greater than 1) and the second sensing voltages Vsen2_1 to Vsen2_n (n being a natural number greater than 1).

For example, the controller 148a can calculate the differences Vsen1_1-Vsen2_1 to Vsen1_n-Vsen2_n between the first sensing voltages Vsen1_1 to Vsen1_n (n being a natural number greater than 1) and the second sensing voltages Vsen2_1 to Vsen2_n (n being a natural number greater than 1) supplied from the plurality of dimming units 140-1 to 140-n (n being a natural number greater than 1) and set a first reference value and a second reference value on the basis of the calculated differences Vsen1_1-Vsen2_1 to Vsen1_n-Vsen2_n between the first sensing voltages and the second sensing voltages.

The controller 148a may decrease the level of the DC signal VR2 supplied from the voltage generator 130 by the first reference value.

The first reference value may be a value obtained by subtracting a predetermined first reference voltage from the largest value among the calculated differences Vsen1_1-Vsen2_1 to Vsen1_n-Vsen2_n between the first sensing voltages and the second sensing voltages. Here, the predetermined first reference voltage may be a drain-source on state voltage of the switch 142 implemented as a transistor.

Operating voltages of the light-emitting units 101-1 to 101-n (n being a natural number greater than 1) may decrease due to a junction temperature increase in the light-emitting element arrays and dimming according to variations in the constant-current control signals Vset_1 to Vset_n. Here, operating voltage reductions in the light-emitting units 101-1 to 101-n (n being a natural number greater than 1) may be different and power losses as heat in the plurality of dimming units 140-1 to 140-n (n being a natural number greater than 1) in response to the operating voltage reductions may be different.

When the operating voltages of the light-emitting units 101-1 to 101-n (n being a natural number greater than 1) decrease, the present embodiment reduces the level of the DC signal VR2 supplied from the voltage generator 130 by the first reference value to meet desired luminance levels (e.g., luminance levels of 100% or 50%) of all light-emitting elements 101-1 to 101-n (n being a natural number greater than 1) and to improve power efficiency.

Furthermore, the controller 148a may reduce the level of the DC signal VR2 supplied from the voltage generator 130 by the sum of the first reference value and the second reference value, for example.

The second reference value may be less than the difference between the largest value and the smallest value from among the differences Vsen1_1-Vsen2_1 to Vsen1_n-Vsen2_n of the calculated first and second voltages.

For example, the second reference value may be half the difference between the largest value and the smallest value from among the differences Vsen1_1-Vsen2_1 to Vsen1_n-Vsen2_n of the calculated first and second voltages. However, the second reference value is not limited thereto.

Here, the second reference value is subtracted from the level of the DC voltage VR2 in order to further improve power efficiency even if some of the light-emitting units 101-1 to 101-n (n being a natural number greater than 1) cannot satisfy desired luminance levels (e.g., luminance level of 100% or 50%).

As described above, the present embodiment can improve power efficiency by reducing the level of the DC signal VR2 commonly provided to the plurality of light-emitting units 101-1 to 101-n (n being a natural number greater than 1) in response to operating voltage variations in the plurality of light-emitting units 101-1 to 101-n (n being a natural number greater than 1).

The detailed description of the preferred embodiments of the present invention has been given to enable those skilled in the art to implement and practice the invention. Although the invention has been described with reference to the preferred embodiments, those skilled in the art will appreciate that various modifications and variations can be made in the present invention without departing from the scope of the invention described in the appended claims. Accordingly, the invention should not be limited to the specific embodiments described herein, but should be accorded the broadest scope consistent with the principles and novel features disclosed herein.

### [Industrial Applicability]

The present invention is used for a light-emitting element driving device capable of improving power efficiency and preventing flickering.

## Claims

1. A device for driving a light-emitting element, comprising:
a voltage generator (130) for providing a DC signal (VR2) for driving a plurality of light-emitting units (101-1, 101-n);
a plurality of sensing resistors (Rsen_1, Rsen_n), each of the plurality of sensing resistors associated to a respective light-emitting unit; and
a plurality of dimming units (140-1, 140-n), each of the plurality of dimming units (140-1, 140-n) associated with a respective light-emitting unit and a respective sensing resistor and controlling current flowing through the respective sensing resistor (Rsen_1, Rsen_n) and the respective light-emitting unit (101-1, 101-n),
wherein each of the plurality of dimming units (140-1, 140-n) includes an amplifier (146) having a first input terminal (146a) whose input is a corresponding one of a plurality of constant-current control signals (Vset_1, Vset), a second input terminal (146b) connected to a corresponding one of the plurality of sensing resistors (Rsen_1, Rsen_n), and an output terminal (146c); each of the plurality of dimming units further includes a switch (142) connected between a corresponding one of the plurality of light-emitting units (101-1, 101-n) and one terminal of a corresponding one of the plurality of sensing resistors (Rsen_1, Rsen_n) and configured to switch in response to the output of the amplifier (146); and each of the plurality of dimming units further includes a voltage sensing unit (144) configured for outputting a first sensing voltage (Vsen1_1, Vsen1_n) according to a sensed voltage at a respective first node (N1) at which a corresponding one of the plurality of light-emitting units (101-1, 101-n) and the respective switch 142 are connected and a second sensing voltage (Vsen2_1, Vsen2_n) according to a sensed voltage at a respective second node (N2) at which the respective switch (142) and one terminal of a corresponding one of the plurality of sensing resistors (Rsen_1, Rsen_n) are connected,
**characterized in that** the device further comprises a controller (148a) configured to adjust the level of the DC signal (VR2) on the basis of the differences (Vsen1_1-Vsen2_1 to Vsen1_n-Vsen2_n) between the first sensing voltages and the second sensing voltages.

2. The device according to claim 1, wherein the controller is configured to adjust the level of the DC signal (VR2) such that a difference among the respective differences between the first sensing voltages and the second sensing voltages becomes equal to or lower than a respective first reference voltage.

3. The device according to claim 1 or claim 2, wherein the controller is configured to block current flow between the respective light-emitting unit and the respective sensing resistor when the difference between the respective first sensing voltage and the respective second sensing voltage exceeds a respective second reference voltage.

4. The device according to any one of claims 1 to 3, wherein each of the plurality of constant-current control signals is an analog signal.

5. The device according to any one of claims 1 to 4, wherein each of the plurality of dimming units is configured to smooth a pulse width modulation signal and provide a signal according to a smoothing result as the respective constant-current control signal.

6. The device according to claim 4, wherein the controller is configured to adjust the level of the DC signal such that the difference between the respective first sensing voltage and the respective second sensing voltage becomes equal to or lower than a respective first reference voltage.

7. The device according to claim 6, wherein each switch of the plurality of dimming units is implemented as a transistor and the respective first reference voltage is a drain-source on state voltage of the respective switch.

8. The device according to claim 1, wherein the controller is configured to decrease the level of the DC signal when the difference between the respective first sensing voltage and the respective second sensing voltage exceeds a respective first reference voltage and is equal to or lower than a respective second reference voltage.

9. The device according to claim 1, wherein the controller is configured to change a level of a respective one of the plurality of constant-current control signals to zero when the difference between the respective first sensing voltage and the respective second sensing voltage exceeds a respective second reference voltage.

10. The device according to any one of claims 1 to 9, further comprising:
a rectifier adapted to rectify an AC signal and provide a rectified signal according to the rectification result; and
a power factor correction unit adapted to correct a power factor of the rectified signal and output the power-factor-corrected rectified signal to the voltage generator.

11. The device according to claim 10, wherein the controller is configured to calculate a respective sensing current flowing through the respective sensing resistor on the basis of the respective second sensing voltage and to turn on or off the power factor correction unit on the basis of the respective calculated sensing current.

12. The device according to claim 11, wherein the controller is configured to turn off the power factor correction unit when the respective sensing current is lower than a respective reference current value.

13. The device according to any one of claims 1 to 12, wherein the voltage sensing unit comprises:
a first sensing unit including a plurality of first resistors serially connected between the respective first node and a ground power supply and providing a voltage applied to at least one of the plurality of first resistors as the respective first sensing voltage; and
a second sensing unit including a plurality of second resistors serially connected between the respective second node and the ground power supply and providing a voltage applied to at least one of the plurality of second resistors as the respective second sensing voltage.

14. The device according to claim 5, wherein each of the plurality of dimming units comprises a respective smoothing circuit including a resistor connected between the controller and the first input terminal of the respective amplifier and a capacitor connected between the first input terminal of the respective amplifier and the ground power supply.

## Patentansprüche

1. Vorrichtung zur Ansteuerung eines lichtemittierenden Elements, die aufweist:
einen Spannungsgenerator (130) zur Bereitstellung eines Gleichstromsignals (VR2) zur Ansteuerung mehrerer lichtemittierender Einheiten (101-1, 101-n);
mehrere Abtastwiderstände (Rsen_1, Rsen_n), wobei jeder der mehreren Abtastwiderstände zu einer jeweiligen lichtemittierenden Einheit gehört; und
mehrere Dimmeinheiten (140-1, 140-n), wobei jede der mehreren Dimmeinheiten (140-1, 140-n), die zu einer jeweiligen lichtemittierenden Einheit und einem jeweiligen Abtastwiderstand gehört, Strom, der durch den jeweiligen Abtastwiderstand (Rsen_1, Rsen_n) und die jeweilige lichtemittierende Einheit (101-1, 101-n) fließt, steuert,
wobei jede der mehreren Dimmeinheiten (140-1, 140-n) einen Verstärker (146) mit einem ersten Eingangsanschluss (146a), dessen Eingang ein entsprechender von mehreren Konstantstromsteuersignalen (Vset_1, Vset) ist, einem zweiten Eingangsanschluss (146b), der mit einem entsprechenden der mehreren Abtastwiderstände (Rsen_1, Rsen_n) verbunden ist, und einem Ausgangsanschluss (146c) umfasst;
wobei jede der mehreren Dimmeinheiten ferner einen Schalter (142) umfasst, der zwischen eine entsprechende der mehreren lichtemittierenden Einheiten (101-1, 101-n) und einen Anschluss eines entsprechenden der mehreren Abtastwiderstände (Rsen_1, Rsen_n) geschaltet ist und konfiguriert ist, um ansprechend auf die Ausgabe des Verstärkers (146) zu schalten;
und wobei jede der mehreren Dimmeinheiten ferner umfasst:
eine Spannungsabtasteinheit (144), die konfiguriert ist, um eine erste Abtastspannung (Vsen_1, Vsen_n) gemäß einer abgetasteten an einem jeweiligen ersten Knoten (N1), an dem eine entsprechende der mehreren lichtemittierenden Einheiten (101-1, 101-n) und der jeweilige Schalter 142 verbunden sind, und eine zweite Abtastspannung (Vsen2_1, Vsen2_n) gemäß einer abgetasteten Spannung an einem jeweiligen zweiten Knoten (N2), an dem der jeweilige Schalter (142) und ein Anschluss eines entsprechenden der mehreren Abtastwiderstände (Rsen1, Rsen_n) verbunden sind, auszugeben,
**dadurch gekennzeichnet, dass** die Vorrichtung ferner eine Steuerung (148a) aufweist, die konfiguriert ist, um den Pegel des Gleichstromsignals (VR2) auf der Basis der Differenzen (Vsen1_1-Vsen2_1 zu Vsen1_n-Vsen_2_n) zwischen den ersten Abtastspannungen und den zweiten Abtastspannungen einzustellen.

2. Vorrichtung nach Anspruch 1, wobei die Steuerung konfiguriert ist, um den Pegel des Gleichstromsignals (VR2) derart einzustellen, dass eine Differenz unter den jeweiligen Differenzen zwischen den ersten Abtastspannungen und den zweiten Abtastspannungen kleiner oder gleich einer jeweiligen ersten Referenzspannung wird.

3. Vorrichtung nach Anspruch 1 oder Anspruch 2, wobei die Steuerung konfiguriert ist, um den Stromfluss zwischen der jeweiligen lichtemittierenden Einheit und dem jeweiligen Abtastwiderstand zu sperren, wenn die Differenz zwischen der jeweiligen ersten Abtastspannung und der jeweiligen zweiten Abtastspannung eine jeweilige zweite Referenzspannung überschreitet.

4. Vorrichtung nach einem der Ansprüche 1 bis 3, wobei jedes der mehreren Konstantstromsteuersignale ein analoges Signal ist.

5. Vorrichtung nach einem der Ansprüche 1 bis 4, wobei jede der mehreren Dimmeinheiten konfiguriert ist, um ein Impulsbreitenmodulationssignal zu glätten und ein Signal gemäß einem Glättungsergebnis als das jeweilige Konstantstromsteuersignal bereitzustellen.

6. Vorrichtung nach Anspruch 4, wobei die Steuerung konfiguriert ist, um den Pegel des Gleichstromsignals derart einzustellen, dass die Differenz zwischen der jeweiligen ersten Abtastspannung und der jeweiligen zweiten Abtastspannung kleiner oder gleich einer jeweiligen ersten Referenzspannung wird.

7. Vorrichtung nach Anspruch 6, wobei jeder Schalter der mehreren Dimmeinheiten als ein Transistor implementiert ist und die jeweilige erste Referenzspannung eine Drain-Source-Ein-Zustandsspannung des jeweiligen Schalters ist.

8. Vorrichtung nach Anspruch 1, wobei die Steuerung konfiguriert ist, um den Pegel des Gleichstromsignals zu verringern, wenn die Differenz zwischen der jeweiligen ersten Abtastspannung und der jeweiligen zweiten Abtastspannung eine jeweilige erste Referenzspannung überschreitet und kleiner oder gleich einer jeweiligen zweiten Referenzspannung ist.

9. Vorrichtung nach Anspruch 1, wobei die Steuerung konfiguriert ist, um einen Pegel eines jeweiligen der mehreren Konstantstromsteuersignale auf null zu ändern, wenn die Differenz zwischen der jeweiligen ersten Abtastspannung und der jeweiligen zweiten Abtastspannung eine jeweilige zweite Referenzspannung überschreitet.

10. Vorrichtung nach einem der Ansprüche 1 bis 9, die ferner aufweist:
einen Gleichrichter, der geeignet ist, um ein Wechselstromsignal gleichzurichten und gemäß dem Gleichrichtungsergebnis ein gleichgerichtetes Signal bereitzustellen; und
eine Leistungsfaktorkorrektureinheit, die geeignet ist, um einen Leistungsfaktor des gleichgerichteten Signals zu korrigieren und das leistungsfaktorkorrigierte gleichgerichtete Signal an den Spannungsgenerator auszugeben.

11. Vorrichtung nach Anspruch 10, wobei die Steuerung konfiguriert ist, um einen jeweiligen Abtaststrom, der durch den jeweiligen Abtastwiderstand fließt, auf der Basis der jeweiligen zweiten Abtastspannung zu berechnen und die Leistungsfaktorkorrektureinheit auf der Basis des jeweiligen berechneten Abtaststroms ein- oder auszuschalten.

12. Vorrichtung nach Anspruch 11, wobei die Steuerung konfiguriert ist, um die Leistungsfaktorkorrektureinheit auszuschalten, wenn der jeweilige Abtaststrom niedriger als ein jeweiliger Referenzstromwert ist.

13. Vorrichtung nach einem der Ansprüche 1 bis 12, wobei die Spannungsabtasteinheit aufweist:
eine erste Abtasteinheit, die mehrere erste Widerstände umfasst, die in Reihe zwischen den jeweiligen ersten Knoten und eine Massestromversorgung geschaltet sind, und eine Spannung, die an wenigstens einen der mehreren ersten Widerstände angelegt wird, als die jeweilige erste Abtastspannung bereitstellt; und
eine zweite Abtasteinheit, die mehrere zweite Widerstände umfasst, die in Reihe zwischen den jeweiligen zweiten Knoten und die Massestromversorgung geschaltet sind, und eine Spannung, die an wenigstens einen der mehreren zweiten Widerstände angelegt wird, als die jeweilige erste Abtastspannung bereitstellt.

14. Vorrichtung nach Anspruch 5, wobei jede der mehreren Dimmeinheiten eine jeweilige Glättungsschaltung aufweist, die einen Widerstand, der zwischen die Steuerung und den ersten Eingangsanschluss des jeweiligen Verstärkers geschaltet ist, und einen Kondensator, der zwischen den ersten Eingangsanschluss des jeweiligen Verstärkers und die Massestromversorgung geschaltet ist, umfasst.

## Revendications

1. Dispositif pour exciter un élément électroluminescent, comprenant :
un générateur de tension (130) pour fournir un signal CC (VR2) pour exciter une pluralité d'unités électroluminescentes (101-1, 101-n) ;
une pluralité de résistances de détection (Rsen_1, Rsen_n), chacune de la pluralité de résistances de détection étant associée à une unité électroluminescente respective ; et
une pluralité d'unités de gradation d'intensité lumineuse (140-1, 140-n), chacune de la pluralité d'unités de gradation d'intensité lumineuse (140-1, 140-n) étant associée à une unité électroluminescente respective et une résistance de détection respective et commandant un courant passant à travers la résistance de détection (Rsen_1, Rsen_n) respective et l'unité électroluminescente (101-1, 101-n) respective,
dans lequel chacune de la pluralité d'unités de gradation d'intensité lumineuse (140-1, 140-n) inclut un amplificateur (146) ayant une première borne d'entrée (146a) dont l'entrée est un signal correspondant d'une pluralité de signaux de commande de courant constant (Vset_1, Vset), une seconde borne d'entrée (146b) connectée à une résistance correspondante de la pluralité de résistances de détection (Rsen_1, Rsen n), et une borne de sortie (146c) ; chacune de la pluralité d'unités de gradation d'intensité lumineuse inclut en outre un commutateur (142), connecté entre une unité correspondante de la pluralité d'unités électroluminescentes (101-1, 101-n) et une borne d'une résistance correspondante de la pluralité de résistances de détection (Rsen_1, Rsen_n) et configuré pour réaliser une commutation en réponse à la sortie de l'amplificateur (146) ; et chacune de la pluralité d'unités de gradation d'intensité lumineuse inclut en outre une unité de détection de tension (144) configurée pour produire en sortie une première tension de détection (Vsen1_1, Vsen1_n) selon une tension détectée au niveau d'un premier nœud (N1) respectif au niveau duquel une unité correspondante de la pluralité d'unités électroluminescentes (101-1, 101-n) et le commutateur 142 respectif sont connectés et une seconde tension de détection (Vsen2_1, Vsen2_n) selon une tension détectée au niveau d'un second nœud (N2) respectif au niveau duquel le commutateur (142) respectif et une borne d'une résistance correspondante de la pluralité de résistances de détection (Rsen_1, Rsen_n) sont connectés,
**caractérisé en ce que** le dispositif comprend en outre un appareil de commande (148a) configuré pour ajuster le niveau du signal CC (VR2) sur la base des différences (Vsen1_1-Vsen2_1 à Vsen1_n-Vsen2_n) entre les premières tensions de détection et les secondes tensions de détection.

2. Dispositif selon la revendication 1, dans lequel l'appareil de commande est configuré pour ajuster le niveau du signal CC (VR2) de telle sorte qu'une différence parmi les différences respectives entre les premières tensions de détection et les secondes tensions de détection devienne égale ou inférieure à une première tension de référence respective.

3. Dispositif selon la revendication 1 ou la revendication 2, dans lequel l'appareil de commande est configuré pour bloquer le passage de courant entre l'unité électroluminescente respective et la résistance de détection respective lorsque la différence entre la première tension de détection respective et la seconde tension de détection respective dépasse une seconde tension de référence respective.

4. Dispositif selon l'une quelconque des revendications 1 à 3, dans lequel chacun de la pluralité de signaux de commande de courant constant est un signal analogique.

5. Dispositif selon l'une quelconque des revendications 1 à 4, dans lequel chacune de la pluralité d'unités de gradation d'intensité lumineuse est configurée pour lisser un signal de modulation d'impulsion en durée et fournir un signal selon un résultat de lissage en tant que signal de commande de courant constant respectif.

6. Dispositif selon la revendication 4, dans lequel l'appareil de commande est configuré pour ajuster le niveau du signal CC de telle sorte que la différence respective entre la première tension de détection respective et la seconde tension de détection respective devienne égale ou inférieure à une première tension de référence respective.

7. Dispositif selon la revendication 6, dans lequel chaque commutateur de la pluralité d'unités de gradation d'intensité lumineuse est mis en œuvre sous forme de transistor et la première tension de référence respective est une source de drain sur la tension d'état du commutateur respectif.

8. Dispositif selon la revendication 1, dans lequel l'appareil de commande est configuré pour réduire le niveau du signal CC lorsque la différence respective entre la première tension de détection respective et la seconde tension de détection respective dépasse une première tension de référence respective et est égale ou inférieure à une seconde tension de référence respective.

9. Dispositif selon la revendication 1, dans lequel l'appareil de commande est configuré pour changer un niveau d'un respectif de la pluralité de signaux de commande de courant constant à zéro lorsque la différence entre la première tension de détection respective et la seconde tension de détection respective dépasse une seconde tension de référence respective.

10. Dispositif selon l'une quelconque des revendications 1 à 9, comprenant en outre :
un redresseur adapté pour redresser un signal CA et fournir un signal redressé selon le résultat de redressement ; et
une unité de correction de facteur de puissance adaptée pour corriger un facteur de puissance du signal redressé et envoyer le signal corrigé de facteur de puissance redressé au générateur de tension.

11. Dispositif selon la revendication 10, dans lequel l'appareil de commande est configuré pour calculer un courant de détection respectif passant à travers la résistance de détection respective sur la base de la seconde tension de détection respective et pour allumer ou éteindre l'unité de correction de facteur de puissance sur la base du courant de détection calculé respectif.

12. Dispositif selon la revendication 11, dans lequel l'appareil de commande est configuré pour éteindre l'unité de correction de facteur de puissance lorsque le courant de détection respectif est inférieur à une valeur de courant de référence respective.

13. Dispositif selon l'une quelconque des revendications 1 à 12, dans lequel l'unité de détection de tension comprend :
une première unité de détection incluant une pluralité de premières résistances connectées en série entre le premier nœud respectif et une alimentation électrique de terre et fournissant une tension appliquée sur au moins une de la pluralité de premières résistances en tant que première tension de détection respective ; et
une seconde unité de détection incluant une pluralité de secondes résistances respectives connectées en série entre le second nœud et l'alimentation électrique de terre et fournissant une tension appliquée sur au moins une de la pluralité de second résistances en tant que seconde tension de détection respective.

14. Dispositif selon la revendication 5, dans lequel chacune de la pluralité d'unités de gradation d'intensité lumineuse comprend un circuit de lissage respectif incluant une résistance connectée entre l'appareil de commande et la première borne d'entrée de l'amplificateur respectif et un condensateur connecté entre la première borne d'entrée respective de l'amplificateur et l'alimentation électrique de terre.
